# EUROPÄISCHE PATENTSCHRIFT

(11) **EP 1 917 292 B1**
(45) Veröffentlichungstag und Bekanntmachung des Hinweises auf die Patenterteilung: **02.10.2013**
(21) Anmeldenummer: 06792745.9
(22) Anmeldetag: 09.08.2006
(51) Int. Cl.: C08G 77/50

(54) **ORGANOPOLYSILOXANE UND EIN VERFAHREN ZU IHRER HERSTELLUNG**
ORGANOPOLYSILOXANES AND METHOD FOR THE PRODUCTION THEREOF
ORGANOPOLYSILOXANES ET PROCEDE DE PRODUCTION DE CES COMPOSES

(30) Priorität: 25.08.2005 DE 102005040323
(43) Veröffentlichungstag der Anmeldung: 07.05.2008
(73) Patentinhaber: Wacker Chemie AG, 81737 München (DE)
(72) Erfinder: HERZIG, Christian, 83329 Waging (DE); LAUTENSCHLAGER, Hans, 84533 Haiming (DE)
(74) Vertreter: Potten, Holger
(86) Internationale Anmeldenummer: PCT/EP2006/065168
(87) Internationale Veröffentlichungsnummer: WO 2007/023084

(56) Entgegenhaltungen:
- EP-A1- 0 786 463
- US-A1- 2004 126 504
- US-B1- 6 414 175
- KOSAKAI ET AL: "silicon compounds as crosslinking agents or as intermediates for polymer modifiers" CHEMICAL ABSTRACTS + INDEXES, AMERICAN CHEMICAL SOCIETY. COLUMBUS, US, Bd. 10, Nr. 123, 4. September 1995 (1995-09-04), XP002025645 ISSN: 0009-2258

## Beschreibung

Die Erfindung betrifft Organopolysiloxane und ein Verfahren zu ihrer Herstellung.

EP 1037 937 B1 offenbart Verfahren zur Herstellung von Organopolysiloxanen, die Struktureinheiten enthalten, in denen zwei R₂Si-Einheiten über einen bifunktionellen α,ω-Alkandiylrest mit 2 bis 18 C-Atomen miteinander verbunden sind.

EP 868 470 B1 beschreibt Organopolysiloxane mit aliphatisch ungesättigten Resten, die unter anderem mindestens eine Einheit der Formel O_{1/2}R₂SiOₓYRSiO enthalten sowie gegebenenfalls auch O_{1/2}R₂siOₓYR₂SiO_{1/2}-Einheiten. Im Falle "x" = 0 sind entweder eine Dialkyl- mit einer Alkyl-siloxyeinheit oder/und zwei Dialkylsiloxyeinheiten miteinander über den Spacer Y verbunden. Y ist ein bifunktioneller Rest der Formel -(CR³₂)ₙCHR³-, mit R³ gleich einem aliphatisch gesättigten Kohlenwasserstoffrest oder gleich H und n gleich Null oder eine ganze Zahl von 1 bis 7. Siloxanpolymere mit einem Spacer O_{1/2}R₂SiYRSiO sind auch in US 4886 865 beschrieben.

Organopolysiloxanverbindungen mit Aktivwasserstoff in Form von H-Si-Verbindungen sowie Kohlenwasserstoffbrücken zwischen zwei Si-Atomen sind beschrieben in KOSAKAI ET AL: "silicon compounds as crosslinking agents or as intermediates for polymer modifiers", CHEMICAL ABSTRACT + INDEXES, AMERICAN CHEMICAL SOCIETY. COLUMBUS, US, Bd. 10, Nr. 123, 4. September 1995 (1995-09-04), XP002025645, ISSN: 0009-2258, EP 786 463 A1, JP 06,107,949 US 4849491, US 6 414 175 B1 und US 2004/126504 A1.

Die vorliegende Erfindung betrifft eine Organopolysiloxanverbindung, die pro Molekül mindestens eine Struktureinheit der allgemeinen Formel

O_{3-a/2}RₐSi-Y(SiRₐO_{3-a/2})_{b} (I)

enthält, wobei
R gleich oder verschieden sein kann und ein einwertige SiC gebundene Methyl-, Ethyl-, Phenyl-, Allyl-, oder Vinylgruppe , die ein oder mehrere N und/oder O-Atome enthalten kann, bedeutet
Y einen zwei- bis zwölfwertigen org. Rest mit 1 bis 30 C-Atomen, der ein oder mehrere O-Atome enthalten kann, bedeutet und der Quotient aus Anzahl der C-Atome in Y und Wertigkeit von Y maximal 3 und
- a: 0 oder 1 ist und
- b: eine ganze Zahl von 1 bis 11 ist und

Strukturelemente der allgemeinen Formel

R¹_{c}SiO_{4-c/2} (II)

enthält,
wobei
R¹ gleich oder verschieden sein kann und eine einwertige SiC gebundene Methyl-, Ethyl-, Phenyl-, Allyl-, oder Vinylgruppe , die ein oder mehrere N- und oder O-Atome enthalten kann, bedeutet und
c 2 oder 3 ist und

Das molekulare Verhältnis der Strukturelemente (II) zu (I) mindestens 50,0 beträgt.

Der Begriff Organopolysiloxane soll im Rahmen der vorliegenden Erfindung sowohl polymere als auch dimere und oligomere Siloxane umfassen.

Bevorzugt ist R eine Methyl- oder Vinylgruppe.

Y ist vorzugsweise eine verbindende organische Einheit mit 1 bis 24 C-Atomen zwischen zwei bis zwölf Siloxanyleinheiten (Si-Atomen). Bevorzugt ist Y zwei-, drei- oder vierwertig, besonders bevorzugt zweiwertig.

Beispiele für Y sind die Methylen-, die Methingruppe oder der vierwertige Kohlenstoff, die 1,1-Ethandiyl- und die 1,2-Ethandiylgruppe, die 1,4 Butandiyl- und die 1,3-Butandiylgruppe.

Enthält Y mindestens 2 C-Atome, kann dieser Rest auch ungesättigt sein. Beispiele hierfür sind die -CH=CH-Gruppe (cis oder trans) und die 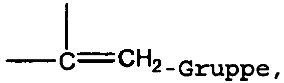 sowie die

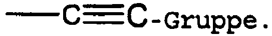

Besonders bevorzugt ist Y eine organische Einheit mit maximal 12 C-Atomen, insbesondere bevorzugt mit 2 C-Atomen. Beispiele für insbesondere bevorzugte Reste sind -CH₂CH₂-, -CH(CH₃)-, -CH=CH-, -C(=CH₂)- oder -C ≡ C-.

Die erfindungsgemäßen Organopolysiloxane können in Abhängigkeit der Anzahl der Struktureinheiten (I) und (II) pro durchschnittlichem Molekül in ihrer Viskosität über einen weiten Bereich variieren. Bevorzugt ist der Bereich von ca. 10 bis ca. 10.000.000 mPa·s, wobei der Bereich von ca. 100 bis ca. 100.000 mPa·s besonders bevorzugt ist.

Im Fall, dass R ein aliphatisch ungesättigter Rest ist, beträgt dessen Menge bezogen auf die Summe der Elemente (I) und (II) bevorzugt nicht mehr als 5 mEquiv./g.

Die erfindungsgemäßen Organopolysiloxane können nach beliebigen Verfahren hergestellt werden. Ein bevorzugtes Verfahren zur Herstellung der erfindungsgemäßen Verbindungen ist die Cohydrolyse von Verbindungen der allg. Formel (III)

X₃₋ₐRₐSi-Y(SiRₐX₃₋ₐ)_{b} (III)

wobei X eine hydrolysierbare Gruppe bedeutet und R, Y, a und b die bereits genannte Bedeutung habenmit Silanen der allg. Formel (IV)

R_{c}SiX_{4-c} (IV)

wobei X eine hydrolysierbare Gruppe bedeutet und R und c die bereits genannte Bedeutung haben.

Bevorzugt ist X eine Halogen-, Säure- und Alkoxygruppe; besonders bevorzugt ist X eine Chlor-, Acetat-, Formiat-, Methoxy- oder Ethoxygruppe.

In der Regel erhält man so leicht handhabbare Organosiloxane, die sich in den üblichen Verfahren/Apparaturen equilibrieren lassen. Dadurch ist es möglich, nahezu beliebige verzweigte Siloxanpolymere herzustellen.

Vorzugsweise wird die Cohydrolyse so ausgeführt, dass ein Gemisch aus den Verbindungen (III) und (VI) unter Kühlung in Wasser oder verdünnten Säuren dosiert wird. Bei gasförmigen Säuren wie HCl ist eine Dosierung in eine konzentrierte wässrige HCl-Lösung ebenfalls sinnvoll, wenn die frei werdende Säure als Gas zurück gewonnen werden soll. Je nach der Natur der Gruppe X ist die Hydrolyse stark exotherm, so dass Kühlung notwendig ist. Zur Vermeidung von Nebenreaktionen ist es vorteilhaft, die Reaktionstemperatur im kühlen Bereich zu halten, bevorzugt bei ca. 5 bis 50°C und besonders bevorzugt bei ca. 10 - 25°C.

Die Reaktionszeiten sind im Fall von Chlorsilanen sehr kurz, so dass die zur Durchführung des Verfahrens im Batchbetrieb benötigte Zeit hauptsächlich von der Kühlleistung abhängt. Alternativ kann die Cohydrolyse von (III) und (VI) auch kontinuierlich durchgeführt werden. Zur Abreicherung von Restsäuren ist gutes Waschen mit Wasser, saubere Phasentrennung sowie Reinigung des Hydrolyseprodukts im Vakuum vorteilhaft.

Das Massenverhältnis der Verbindungen (III) und (IV) wird dem beabsichtigten Molverhältnis der Struktureinheiten (I) und (II) angepasst und entspricht gewöhnlich den berechneten Werten, da die Cohydrolyse im wesentlichen verlustfrei arbeitet. Das Verfahren kann bei Normaldruck durchgeführt werden. Je nach Zielsetzung ist aber höherer oder niedriger Druck ebenfalls praktikabel.

Eine bevorzugte Ausführung des Verfahrens ist die Herstellung erfindungsgemäßer Organopolysiloxane in zwei Stufen: Eine Cohydrolyse der Verbindungen (III) und (VI) zur Herstellung eines Konzentrates, gefolgt von einer Equilibrierung dieses Konzentrats mit Organopolysiloxanen, die die Struktureinheit (I) nicht enthalten. Es liegt in der Natur der Sache, dass in solchen Fällen in der ersten Stufe eher geringere Molverhältnisse der Strukturelemente (II) zu (I) angesteuert werden, die bevorzugt unter ca. 50 liegen. Ein höheres Molverhältnis ergibt sich dann nach der Equilibrierung mit Organopolysiloxanen, die keine Struktureinheiten (I) enthalten.

Die erfindungsgemäßen Organopolysiloxane sind verzweigte, stark verzweigte bis nahezu dendrimerartige Polymere, die überall da eingesetzt werden können, wo diese Strukturtypen aufgrund ihrer chemischen und physikalischen Eigenschaften Vorteile bieten. Polymere, die Vinyldimethylsiloxyendgruppen enthalten, werden bevorzugt zur Formulierung schnell vernetzender Systeme nach dem Hydrosilylierungsprinzip verwendet. Durch einen höheren Verzweigungsgrad und damit verbundener Erhöhung reaktiver Gruppen pro Polymermolekül, lassen sich Vernetzungsgeschwindigkeiten weiter steigern. Daher können erfindungsgemäße Polymere vorteilhaft zur Herstellung schnell vernetzender Additionssysteme eingesetzt werden, wie sie wiederum zur Herstellung von Trennbeschichtungen auf Papieren und Folien benötigt werden.

Die folgenden Beispiele dienen der weiteren Erläuterung der Erfindung:

### Beispiel 1:

Ein Gemisch aus 109 g redestilliertem 1,2-Bis(methyldichlorsilyl)ethan (1,7 Equ. Cl) und 820 g Vinyldimethylchlorsilan (6,8 Equ. Cl) wird auf 10°C gekühlt. Unter Rühren und gleichzeitigem Kühlen werden in ca. 80 Minuten insgesamt 1,7 5 %ige HCl-Lösung so zudosiert, dass die Temperatur des Reaktionsgemisches bei 10 - 20°C gehalten werden kann. Danach wird 30 Minuten lang kräftig gerührt, anschließend die Phasen separiert. Die Siloxanphase wird 4x mit je 1 1 Wasser gewaschen, mit 0,51 5 %iger NaHCO₃-Lösung neutralisiert und erneut mit 11 Wasser nachgewaschen. Flüchtige Hydrolyseprodukte werden im Vakuum bis 80°C abgetrennt (hauptsächlich Divinyltetramethyldisiloxan). Man erhält 149,8 g einer klaren Flüssigkeit als Rückstand, die eine Viskosität von 7,2 mm²/s (25°C) hat und mit einer Jodzahl von 169,6 genau eine C=C-Doppelbindung pro 149,8 g aufweist. Das Verhältnis von Endgruppen/Verzweigungseinheit beträgt 2,57. Das Produkt enthält ca. 90 % des eingesetzten 1,2-Bis(methyldichlorsilyl)ethans in hydrolysierter Form.

### Beispiel 2:

Das Beispiel 1 wird mit denselben Rohstoffen wiederholt, wobei aber nur 25 % des Vinyldimethylchlorsilans (also 205 g) eingesetzt werden. Nach Destillation der flüchtigen Produkte erhält man diesmal 89,4 g eines klaren Öls als Rückstand, dessen Viskosität 25,4 mm²/s (25°C) beträgt.

### Beispiel 3:

Das Beispiel 2 wird mit denselben Rohstoffen sinngemäß wiederholt, wobei diesmal 436g 1,2-Bis(methyldichlorsilyl)ethan (6,8 Equ. Cl) eingesetzt werden. Nach Dosierung der HCl-Lösung zwischen 10 und 20°C lässt man die hochviskose Mischung 90 Minuten unter Rühren nachreagieren. Identische Aufarbeitung ergibt ein hochviskoses Rohprodukt, das Gel-Anteile enthält. Nach Entfernen flüchtiger Bestandteile wird das trübe hochviskosen Öl in Toluol gelöst und Gel-Anteile werden abfiltriert. Nach Entfernung des Lösemittels erhält man ein klares Öl mit der Viskosität 9100 mm²/s (25°C). Das Versuchsergebnis zeigt, dass bei gleichem Molverhältnis von Verbindung der Formel (IV) mit "c=3" und Verbindung der Formel (III) mit Y=difunktionell, "a=1" und "b=1" keine sinnvolle Cohydrolyse durchgeführt werden kann, da das Produkt Gel-Anteile enthält, die als Verluste entfernt werden müssen.

### Beispiel 4:

Aus dem in Beispiel 1 hergestellten verzweigten Vinylsiloxan mit einer Vinylgruppenkonzentration von 6,68/kg wird durch Equilibrieren mit einem linearen Siloxan ein verzweigtes Vinylpolymer hergestellt. Hierzu werden 32,5 g dieses Produkts mit 520g eines methylterminierten Siliconöls der Viskosität von 5000mm²/s vermischt und bei 120°C unter Katalyse von 0,1 g PNCl₂ equilibriert. Nach 2 Stunden wird der Katalysator mit Natriumacetat desaktiviert. Das Rohprodukt wird bei 140°C im Vakuum von flüchtigen Bestandteilen befreit und anschließend filtriert. Man erhält ein farbloses, klares Siliconöl mit einer Viskosität von 210 mm²/s und einer Jodzahl von 10,3.

## Patentansprüche

1. Organopolysiloxanverbindung, die pro Molekül mindestens eine Struktureinheit der allgemeinen Formel
O_{3-a/2}RₐSi-Y(SiRₐO_{3-a/2})_{b} (I)
enthält, wobei
R gleich oder verschieden sein kann und eine einwertige SiC-gebundene Methyl-, Ethyl-, Phenyl-, Allyl- oder Vinylgruppe, die ein oder mehrere N- und/oder O-Atome enthalten kann, bedeutet
Y einen zwei- bis zwölfwertigen org. Rest mit 1 bis 30 C-Atomen, der ein oder mehrere O-Atome enthalten kann, bedeutet und
der Quotient aus Anzahl der C-Atome in Y und Wertigkeit von Y maximal 3 ist und
a 0 oder 1 ist und
b eine ganze Zahl von 1 bis 11 ist und
Strukturelemente der allgemeinen Formel
R¹_{c}SiO_{4-c/2} (II)
enthält, wobei
R¹ gleich oder verschieden sein kann und eine einwertige SiC-gebundene Methyl-, Ethyl-, Phenyl-, Allyl- oder Vinylgruppe, der ein oder mehrere N- und oder O-Atome enthalten kann bedeutet und
c 2 oder 3 ist
und das molekulare Verhältnis der Strukturelemente (II) zu (I) mindestens 50,0 beträgt.

2. Organopolysiloxanverbindung gemäß Anspruch 1, **dadurch gekennzeichnet, dass** Y ein Rest mit 1 bis 24 C-Atomen zwischen zwei bis zwölf Siloxanyleinheiten ist.

3. Organopolysiloxanverbindung gemäß Anspruch 2 **dadurch gekennzeichnet, dass** Y zwei-, drei- oder vierwertig, besonders bevorzugt zweiwertig ist.

4. Verfahren zur Herstellung einer Organopolysiloxanverbindung gemäß einem der Ansprüche 1 bis 3 mittels Cohydrolyse von Verbindungen der allg. Formel (III)
X₃₋ₐRₐSi-Y(SiRₐX₃₋ₐ)_{b} (III)
wobei X eine hydrolysierbare Gruppe bedeutet und R, Y, a und b die genannte Bedeutung haben mit Silanen der allg. Formel (IV),
R_{c}SiX_{4-c} (IV)
wobei X eine hydrolysierbare Gruppe bedeutet und R und c die genannte Bedeutung haben.

5. Verfahren gemäß Anspruch 4, **dadurch gekennzeichnet, dass** X ausgewählt ist aus der Gruppe Halogen-, Säure- und Alkoxyrest.

## Claims

1. Organopolysiloxane compound containing per molecule at least one structural unit of the general formula
O_{3-a/2}RₐSi-Y(SiRₐO_{3-a/2})_{b} (I)
where
R can be identical or different and denotes a monovalent SiC-bonded methyl, ethyl, phenyl, allyl or vinyl group which may contain one or more N and/or O atoms,
Y is a divalent to dodecavalent organic radical which has 1 to 30 C atoms and may contain one or more O atoms, and
the ratio of the number of C atoms in Y to the valence of Y is not more than 3, and
a is 0 or 1, and
b is an integer from 1 to 11 and
containing structural elements of the general formula
R¹_{c}SiO_{4-c/2} (II)
where
R¹ may be identical or different and denotes a monovalent SiC-bonded methyl, ethyl, phenyl, allyl or vinyl group which may contain one or more N and/or O atoms, and
c is 2 or 3,
and the molecular ratio of the structural elements (II) to (I) is at least 50.0.

2. Organopolysiloxane compound according to Claim 1, **characterized in that** Y is a radical having 1 to 24 C atoms between two to twelve siloxanyl units.

3. Organopolysiloxane compound according to Claim 2, **characterized in that** Y is divalent, trivalent or tetravalent, with particular preference divalent.

4. Process for preparing an organopolysiloxane compound according to any one of Claims 1 to 3 by means of cohydrolysis of compounds of the general formula (III)
X₃₋ₐRₐSi-Y(SiRₐX₃₋ₐ)_{b} (III)
where X is a hydrolyzable group and R, Y, a and b have the stated definition with silanes of the general formula (IV)
R_{c}SiX_{4-c} (IV)
where X denotes a hydrolyzable group and R and c have the stated definition.

5. Process according to Claim 4, **characterized in that** X is selected from the halogen radical, acid radical and alkoxy radical group.

## Revendications

1. Composés d'organopolysiloxane, contenant par molécule au moins une unité de structure de formule générale
O_{3-a/2}RₐSi-Y(SiRₐO_{3-a/2})_{b} (I)
où
R peut être identique ou différent et signifie un groupe méthyle, éthyle, phényle, allyle ou vinyle monovalent, lié par SiC, qui peut contenir un ou plusieurs atomes de N et/ou de O
Y signifie un radical organique divalent à dodécavalent comprenant 1 à 30 atomes de carbone, qui peut contenir un ou plusieurs atomes d'O et le quotient du nombre d'atomes de carbone dans Y et de la valence de Y vaut au maximum 3 et
a vaut 0 ou 1, et
b vaut un nombre entier de 1 à 11 et
des éléments de structure de formule générale
R¹_{c}SiO_{4-c/2} (II)
où
R¹ peut être identique ou différent et signifie un groupe méthyle, éthyle, phényle, allyle ou vinyle monovalent, lié par SiC, qui peut contenir un ou plusieurs atomes de N et/ou de O
c vaut 2 ou 3,
et le rapport molaire des éléments de structure (II) à (I) vaut au moins 50,0.

2. Composé d'organopolysiloxane selon la revendication 1, **caractérisé en ce que** Y représente un radical comprenant 1 à 24 atomes de carbone entre deux à douze unités siloxanyle.

3. Composé d'organopolysiloxane selon la revendication 2, **caractérisé en ce que** Y est divalent, trivalent ou tétravalent, de manière particulièrement préférée divalent.

4. Procédé pour la préparation d'un composé d'organopolysiloxane selon l'une quelconque des revendications 1 à 3 par cohydrolyse de composés de formule générale (III)
X₃₋ₐRₐSi-Y(SiRₐX₃₋ₐ)_{b} (III)
où X signifie un groupe hydrolysable et R, Y, a et b présentent la signification mentionnée avec des silanes de formule générale (IV)
R_{c}SiX_{4-c} (IV)
où X signifie un groupe hydrolysable et R et c présentent la signification mentionnée.

5. Procédé selon la revendication 4, **caractérisé en ce que** X est choisi dans le groupe formé par les radicaux halogène, acide et alcoxy.
